(19) Europäisches Patentamt
European Patent Office
Office européen des brevets

(11) **EP 2 629 531 A1**

(12) **EUROPEAN PATENT APPLICATION**
published in accordance with Art. 153(4) EPC

(43) Date of publication:
**21.08.2013 Bulletin 2013/34**

(51) Int Cl.:
**H04N 13/00** (2006.01)

(21) Application number: **11870997.1**

(22) Date of filing: **18.08.2011**

(86) International application number:
**PCT/CN2011/001377**

(87) International publication number:
**WO 2013/023325 (21.02.2013 Gazette 2013/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Beijing Goland Tech Co., Ltd.**
**Beijing 100190 (CN)**

(72) Inventors:
• **FENG, Tao**
**Beijing 100190 (CN)**

• **ZHANG, Yanding**
**Beijing 100190 (CN)**
• **YANG, Dong**
**Beijing 100190 (CN)**

(74) Representative: **Groth, Wieland**
**Groth Patentanwälte**
**Schopenstehl 22**
**20095 Hamburg (DE)**

(54) **METHOD FOR CONVERTING 2D INTO 3D BASED ON IMAGE MOTION INFORMATION**

(57) The present invention relates to the field of 2D to 3D conversion, in particular discloses a method of converting 2D into 3D based on image motion information. The method comprises: S1, obtaining a depth value of each pixel of the input 2D image based on a method of motion estimation; S2, accumulating the depth value of each pixel in accordance with a luminance value of each pixel to obtain a depth image of the input 2D image; S3, reconstructing a left eye and/or a right eye image based on a reconstruction of depth image in accordance with the depth image obtained in the step of S2; S4, combining the left eye image and the right eye image obtained in the step of S4 and outputting a combined image to obtain the 3D image. In the method herein, due to the accumulation process of the depth value obtained by the motion estimation, the resulted depth image is continuous and dense, which improves the quality of the reconstructed image and the 3D visual effect.

Figure 1/2

Obtaining a depth value of each pixel of the input 2D image based on a method of motion estimation

↓

Accumulating a depth value of each pixel in accordance with a luminance value of each pixel to obtain a depth image of the input 2D image

↓

Reconstructing a left eye and/or a right eye image based on a reconstruct of depth image in accordance with the depth image obtained in the step of S2

↓

Combining the left eye image and the right eye image obtained in the step of S4 and outputting a combined image to obtain the 3D image

EP 2 629 531 A1

## Description

### Technical Field

The present application relates to the field of conversion from 2D into 3D, and in particular to a method of converting 2D into 3D based on image motion information.

### Background Art

3D (Three Dimensions) TVs have swept the world and become a new trend in the global TV industry. Every major TV manufacturer has launched its own 3D TV. The application of 3D has become more and more popular in people's life. Although 3D films are kept shooting all the time, the 3D resources are still unable to meet the current market needs. A new market desire to convert the resources of 2D (Two Dimensions) into that of 3D automatically has been created. The conversion from 2D into 3D is to generate the second view video based on 2D view content, and the conversion process comprises two aspects of treatment: one is depth estimation for the purpose of obtaining a depth map/image; the other is Depth Image Based Rendering, DIBR. The depth image stores the depth information as grey values in 8 bits (Grey value 0 represents the farthest value, and grey value 255 represents the nearest value). In the past few years, there have been numerous algorithms proposed in the filed of 2D to 3D conversion. The algorithm based on motion estimation is commonly used, which obtains the depth image of the input image by the method of motion estimation. However, the wide application of the said method has been limited, because a depth image requires considerable density and precision, but the depth image achieved by the current algorithm converting 2D into 3D based on the motion estimation are sparse, thus different objects cannot be distinguished at the position where they are decomposed, hence the image quality achieved by means of DIBR and thereby the promotion of the related method have been hindered.

### Contents of the Invention

### Technical Problems to Be solved

The technical problems to be solved by the present invention is to improve the image quality generated by the method of converting 2D into 3D based on image motion information.

### Technical Solution

To solve the aforementioned problem, a method of converting 2D into 3D based on motion estimation is provided, comprising:

S1, obtaining a depth value of each pixel of the input 2D image based on a method of motion estimation;

S2, accumulating the depth value of each pixel in accordance with a luminance value of each pixel to obtain a depth image of the input 2D image;

S3, reconstructing a left eye image and/or a right eye image based on a reconstruction of depth image in accordance with the depth image obtained in the step of S2;

S4, combining the left eye image and the right eye image obtained in the step of S4 and outputting a combined image to obtain a 3D image;

Preferably, the step of S1 further comprises:

S1.1, computing a motion vector of each pixel based on the method of motion estimation;

S1.2, computing the depth value of each pixel respectively according to the motion vector obtained in the step of S 1.1.

Preferably, the depth value is calculated by a formula below:

$$D(x,y)=C*\sqrt{MV_x^2+MV_y^2} \; ;$$

Preferably, the method of motion estimation is the diamond search algorithm.
Preferably, the step of S2 further comprises:

S2.1, accumulating the depth value of each pixel beginning from the first row of the input 2D image to obtain an accumulated depth value D(x, y) of each pixel;
S2.2, obtaining a normalized depth value D(x,y)" by normalizing the accumulated depth value to an interval [0 , 255] according to the formula below:

$$D(x,y)'' = \min\left(255, \max\left(0, \frac{D(x,y)'}{\text{sum'}} * \text{DEPTH\_SCALE}\right)\right) \; ;$$

wherein, I (x,y) is the luminance value of the pixel at the position (x,y) with a value interval [0 , 255]; **SCALE** is the scaling factor of the luminance value;
**width** is the width value of the input 2D image, **height** is the height value of the input 2D image; **DEPTH_SCALE** is the scaling factor of the depth value;

$$\text{sum'} = \frac{\text{sum}}{\text{sidth*height}} \; ;$$

$$\text{sum} = \sum_{x=0,y=0}^{n} D(x,y)' \; ;$$

Preferably, the step of S2.1 further comprises:

S2.11, if y is zero, then D(x,y)'=0, otherwise, carrying out the step of S2.12;
S2.12, if y is an odd number and x is zero, then D(x,y)'=D(x,y-1)'+D(x,y);
if x is not zero, then
D(x,y)'=min(D(x-1,y)'+|I(x+1,y)-I(x-1,y)|*SCALE,D(x,y-1)')+D(x,y)*(1+|I(x,y-1)-|(x,y+1)|*SCALE);
otherwise, carrying out the step of S2.13;
S2.13, if x=**width**-1, then D(x,y)'=D(x,y-1)'+D(x,y); otherwise,
D(x,y)'=min(D(x+1,y)'+|I(x+1,y)-I(x-1,y)|*SCALE,D(x,y-1)')+D(x,y)*(1+|I(x,y-1)-I(x,y+1)|*SCALE);
S2.14, if y < **height,** then returning to the step of S2.11,
Otherwise, outputting the result D(x,y)' of the step of S2.12 or S2.13.

Preferably, **SCALE**=0.1.
Preferably, **DEPTH_SCALE**=120.
Preferably, the step of S3 further comprises:

S3.1, reconstructing the left eye or right eye image according to the formula below:

$$xl = xc + \frac{tx}{2}\frac{f}{z}$$

$$xr = xc - \frac{tx}{2}\frac{f}{z}$$

$$1/Z = D_z(x,y)'' - Dzero;$$

wherein, xl and xr are the positions in left eye image and right eye image corresponding to the position xc of the input 2D image respectively; f is the focal length of the eye; tx is the distance between the two eyes; Z is the distance between the pixel point and human eye; Dzero is the position of zero plane with a value interval [0,255];
S3.2, copying the pixel value at the position (xc,y) to the corresponding position (xl,y) or (xr,y);

Preferably, Dzero=255.

**Beneficial Effect**

Due to the accumulation process of the depth value obtained by the motion estimation, the depth image provided in the method described herein is continuous and dense, which improves the quality of the reconstructed image and the 3D visual effect.

**Brief Description of the Drawings**

Fig. 1/2 is a flow chart of the method of converting 2D into 3D based on image motion information according to one embodiment of the present application;

Fig. 2/2 is a schematic view of the visual model of a dual-camera.

**Specific Mode for Carrying Out the Invention**

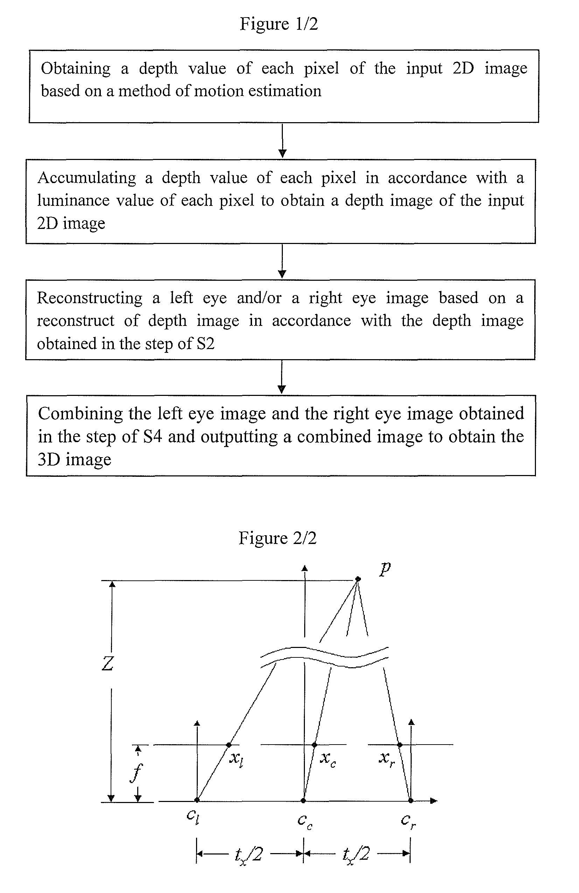

Hereinafter the method of converting 2D into 3D based on image motion information provided by the present invention will be described in detail with reference to the accompanying drawings and embodiments.
As shown in Fig. 1/2, the method of converting 2D into 3D based on image motion information according to one embodiment of the present application comprises:

S1, obtaining a depth value of each pixel of the input 2D image based on a method of motion estimation;

S2, accumulating the depth value of each pixel in accordance with a luminance value of each pixel to obtain a depth image of the input 2D image;

S3, reconstructing a left eye and/or a right eye image based on a reconstruction of depth image in accordance with the depth image obtained in the step of S2;

S4, combining the left eye image and the right eye image obtained in the step of S4 and outputting a combined image to obtain the 3D image.

In the method of this embodiment, the step of S1 further comprises:

S1.1, computing a motion vector of each pixel based on the method of motion estimation, wherein, the method of motion estimation adopts the diamond search algorithm. It begins with big diamond search which is followed by small diamond search, and ends with the resulted motion vector with integral pixel precision. Certainly, other search algorithms are also applicable, without limiting the method described herein.

S1.2, computing the depth value of each pixel respectively according to the motion vector obtained in the step of S1.1.

wherein, the depth value is calculated from a formula below:

$$D(x,y)=C*\sqrt{MV_x^2+MV_y^2} \qquad\qquad (1)$$

y is the row where the pixel locates; x is the column where the pixel locates; D (x,y) is the depth value of the pixel at an unknown position (x,y); MVx and MVy are motion vectors in the horizontal direction and vertical direction of the pixel, respectively; C is a constant, in this embodiment C=1.

To enhance the search precision of step S1.1 and to lessen the influence on the precision of motion search caused by noise (in particular those salt-and-pepper noise added in some video resource), before carrying out the motion search of step S1.1, a de-noising processing can be conducted on the input 2D image. This processing is commonly known by those skilled in this art and herein no further details will be given thereto.

Since the motion vector obtained by the motion search is discontinuous, the depth image obtained by direct computation is quite sparse, while the actual depth image should be dense. Therefore, the present application conducts an accumulation of the depth values obtained by computing the motion vector according to the luminous information of each pixel.

In this embodiment, the step of S2 further comprises:

S2.1, accumulating the depth value of each pixel beginning from the first row of the input 2D image to obtain an accumulated depth value D(x,y)' of each pixel, further comprising:

S2.11, if y is zero, then D(x,y)'=0, otherwise, carrying out the step of S2.12;
S2.12, if y is an odd number and x is zero, then D(x,y)'=D(x,y-1)'+D(x,y), if x is not zero, then
D(x,y)'=min(D(x-1,y)'+|I(x+1,y)-I(x-1,y)|*SCALED(x,y-1)')+D(xy)*(1+|I(x,y-1)-I(x,y+1)|*SCALE);
otherwise, carrying out the step of S2.13;
S2.13, if x=width-1, then D(x,y)'=D(x,y-1)'+D(x,y), otherwise,
D(x,y)'=min(D(x+1,y)'+|I(x+1,y)-I(x-1,y)|*SCALE,D(x,y-1)')+D(x,y)*(1+|I(x,y-1)-I(x,y+1)|*SCALE)
S2.14, if y < height, then returning to the step of S2.11, otherwise outputting the result D(x,y)' of the step of S2.12 or S2.13;
S2.2, obtaining a normalized depth value D(x,y)" and hence obtaining a continuous and dense depth image by normalizing the accumulated depth value to an interval [0 , 255] according to the formula below:

$$D(x,y)'' = \min\left(255, \max\left(0, \frac{D(x,y)'}{sum'}*DEPTH\_SCALE\right)\right); \qquad\qquad (6)$$

wherein, I (x,y) is the luminance value of the pixel at the position (x,y) with a value interval [0 , 255]; **SCALE** is the scaling factor of the luminance value, in this embodiment SCALE=0.1; **width** is the width value of the input 2D image; **height** is the height value of the input 2D image; **DEPTH_SCALE** is the scaling factor of the depth value, in this embodiment, DEPTH_SCALE=120;

$$sum'=\frac{sum}{sidth*height} \qquad\qquad (7)$$

$$sum=\sum_{x=0,y=0}^{n} D(x,y)' \qquad\qquad (8);$$

S2.3, conducting an asymmetric Gaussian filtering on the normalized depth value D(x,y)" obtained in the step of S2.2 to obtain an ultimate depth value $D_z(x,y)$". The asymmetric Gaussian filtering is commonly known by those skilled in this art and herein no further details will be given thereto.

As a projection transformation will be conducted in the horizontal direction of the image, the depth values should keep continuous as far as possible in the horizontal direction to avoid the influence of excessive noise caused by the motion search. Therefore, the present application does not apply the horizontal gradient value to the scale motion for achieving the depth value.

Due to the human visual property, the visual perception of 70% people relies heavily on the right eye, and 20% on the left eye. To reduce the computation amount, when using DIBR to reconstruct image, the present invention only reconstructs the eye on which is not heavily relied, herein defaulting to the left eye. Moreover, although the quality of a reconstructed frame in this case is poor, it does not affect the 3D visual effect. Consequently, the step of S3 in this embodiment takes the left eye image as an example, namely, in the step of S3, the left eye image is reconstructed based on DIBR according to the depth image obtained in the step of S2.

As shown in Fig. 2/2, wherein Cc is the input 2D image; C1 is the reconstructed left eye image; Cr is the reconstructed right eye image; f is the focus length of the eye; tx is the baseline distance, i.e., the distance between the two eyes; Z is the distance between the observed pixel point and the human eye, which is computed in accordance with the formula (11); Dzero is the position of zero plane with a value interval [0,255], in this embodiment a value of 255 is taken. Formula (9), (10) are projection geometrical relationship in Fig.2 corresponding to the same pixel in C1, Cr and Cc. According to the formula (9), (10), the value of x1 or xr corresponding to the position xc of the input 2D image is computed, and then the pixel value at the position (xc, y) is copied to the corresponding position (xl, y) or (xr, y). (copied to (xl, y) in this embodiment).

Namely the step of S3 further comprises:

S3.1, reconstructing the left eye or right eye image according to the formula below:

$$xl = xc + \frac{tx}{2}\frac{f}{z} \qquad\qquad (9)$$

$$xr = xc - \frac{tx}{2}\frac{f}{z} \qquad\qquad (10)$$

$$1/Z = D_z(x,y)" - Dzero \qquad\qquad (11)$$

wherein, xl and xr are the positions in left eye image and right eye image corresponding to the position xc of the input 2D image respectively; f is the focal length of the eye; tx is the distance between the two eyes; Z is the distance between the pixel point and the human eye; Dzero is the position of zero plane with a value interval [0,255];

S3.2, copying the pixel value at the position (xc,y) to the corresponding position (xl,y) or (xr,y).

To lessen the zigzagging effect of the reconstructed image, the input 2D image is scaled in the horizontal direction firstly, in order to enhance the pixel precision at the time of projection. In this embodiment, the image is stretched in the horizontal direction to be four times of its original size. In line with the aforementioned visual relation of human eye, the value x of 1/4 pixel precision to which every x1 in each row corresponds is computed. If the value x to which x1 corresponds exceeds the boundary of the image, then the pixel value at the position x1 is obtained based on interpolation; if there are multiple x1 corresponding to the same x, then take the x1 which makes D(x,y)" largest, then the pixel values of other x1 are obtained based on interpolation; if there is an exclusive x to which x1 corresponds, then the pixel value at the position x1 is the pixel value at the position x in the input 2D image.

The aforementioned embodiments of the present invention are disclosed for illustrative purpose only but not limiting the scope thereof. Those skilled in the art will appreciate that various changes and variants can be made thereto without departing from the scope and spirit of the invention. Therefore all equivalent technical solutions also fall within the scope of the present invention.which should be defined by the appended claims.

**Industrial applicability**

The reconstructed images obtained by the method of converting 2D into 3D based on image motion information described herein have high image quality, excellent 3D visual effect, and hence the present method is of great importance for the market development in impelling the automatic conversion from 2D resource into 3D.

**Claims**

1. A method of converting 2D into 3D based on image motion information, **characterized in that**, the method comprises the following steps:

   S1, obtaining a depth value of each pixel of the input 2D image based on a method of motion estimation;
   S2, accumulating the depth value of each pixel in accordance with a luminance value of each pixel to obtain a depth image of the input 2D image;
   S3, reconstructing a left eye image and/or a right eye image based on a image reconstruction of depth image in accordance with the depth image obtained in the step of S2;
   S4, combining the left eye image and the right eye image obtained in the step of S4, and outputting a combined image to obtain the 3D image.

2. The method of converting 2D into 3D based on image motion information of claim 1, **characterized in that**, the step of S1 further comprises:

   S1.1, computing a motion vector of each pixel based on the method of motion estimation;
   S1.2, computing the depth value of each pixel respectively according to the motion vector obtained in the step of S 1.1.

3. The method of converting 2D into 3D based on image motion information of claim 2, **characterized in that**, the method of motion estimation is the diamond search algorithm.

4. The method of converting 2D into 3D based on image motion information of claim 3, **characterized in that**, the step of S2 further comprises:

   S2.1, accumulating the depth value of each pixel beginning from the first row of the input 2D image to obtain an accumulated depth value D(x,y)' of each pixel;
   S2.2, obtaining a normalized depth value D(x,y)" by normalizing the accumulated depth value to an interval [0 , 255] according to the formula below:

$$D(x,y)'' = \min\left(255, \max\left(0, \frac{D(x,y)'}{\text{sum}'} * \text{DEPTH\_SCALE}\right)\right) \; ;$$

   wherein, I(x,y) is the luminance value of the pixel at the position(x,y) with a value interval [0 , 255]; SCALE is the scaling factor of the luminance value;
   width is the width value of the input 2D image; height is the height value of the input 2D image; DEPTH_SCALE is the scaling factor of the depth value;

$$\text{sum}' = \frac{\text{sum}}{\text{sidth} * \text{height}} \; ;$$

$$sum = \sum_{x=0,y=0}^{n} D(x,y)'$$ .

5. The method of converting 2D into 3D based on image motion information of claim 4, **characterized in that**, the step of S2.1 further comprises:

S2.11, if y is zero, then D(x,y)'=0, otherwise, carrying out the step of S2.12;
S2.12, if y is an odd number and x is zero, then D(x,y)'=D(x,y-1)'+D(x,y);
if x is not zero, then

$$D(x,y)' = \min\left(D(x-1,y)' + |I(x+1,y) - I(x-1,y)| * SCALE, D(x,y-1)'\right) + D(x,y) * \left(1 + |I(x,y-1) - I(x,y+1)| * SCALE\right);$$

otherwise, carrying out the step of S2.13;
S2.13, if x=width-1, then D(x,y)'=D(x,y-1)'+D(x,y); otherwise,

$$D(x,y)' = \min\left(D(x+1,y)' + |I(x+1,y) - I(x-1,y)| * SCALE, D(x,y-1)'\right) + D(x,y) * \left(1 + |I(x,y-1) - I(x,y+1)| * SCALE\right);$$

S2.14, if y < height, then returning to the step of S2.11, otherwise outputting the result D(x,y)' of the step of S2.12 or S2.13.

6. The method of converting 2D into 3D based on image motion information of claim 5, **characterized in that**, SCALE=0.1.

7. The method of converting 2D into 3D based on image motion information of claim 5, **characterized in that**, DEPTH_SCALE=120.

8. The method of converting 2D into 3D based on image motion information of claim 5, **characterized in that**, the step of S3 further comprises:

S3.1, reconstructing the left eye or right eye image according to the formula below:

$$xl = xc + \frac{tx}{2}\frac{f}{z}$$

$$xr = xc - \frac{tx}{2}\frac{f}{z}$$

$$1/Z = \frac{D_z(x,y)''}{} - Dzero;$$

wherein, xl and xr are the positions in left eye image and right eye image corresponding to the position xc of the input 2D image respectively; f is the focal length of the eye; tx is the distance between the two eyes; Z is the distance between the pixel point and human eye; Dzero is the position of zero plane with a value interval [0,255];

S3.2, copying the pixel value at the position (xc, y) to the corresponding position (xl, y) or (xr, y).

9. The method of converting 2D into 3D based on image motion information of claim 8, **characterized in that**, Dzero=255.

Figure 1/2

Obtaining a depth value of each pixel of the input 2D image based on a method of motion estimation

Accumulating a depth value of each pixel in accordance with a luminance value of each pixel to obtain a depth image of the input 2D image

Reconstructing a left eye and/or a right eye image based on a reconstruct of depth image in accordance with the depth image obtained in the step of S2

Combining the left eye image and the right eye image obtained in the step of S4 and outputting a combined image to obtain the 3D image

Figure 2/2

<table>
<tr><td colspan="2">**INTERNATIONAL SEARCH REPORT**</td><td>International application No.<br>**PCT/CN2011/001377**</td></tr>
</table>

**A. CLASSIFICATION OF SUBJECT MATTER**

H04N 13/00 (2006.01) i

According to International Patent Classification (IPC) or to both national classification and IPC

**B. FIELDS SEARCHED**

Minimum documentation searched (classification system followed by classification symbols)

IPC: H04N 13/-, H04N 15/-, H04N 9/-, G06T 7/-

Documentation searched other than minimum documentation to the extent that such documents are included in the fields searched

Electronic data base consulted during the international search (name of data base and, where practicable, search terms used)

CNKI, CNPAT, WPI, EPODOC: 3D, plane, 2D, depth map, luminance, superimpose, accumulation, weight, vector, reorganization, three w dimension, stereo+, two w dimension, depth, image, convert+, motion, estimate+, render+, scale, transfer+, add+, adjust+

**C. DOCUMENTS CONSIDERED TO BE RELEVANT**

| Category* | Citation of document, with indication, where appropriate, of the relevant passages | Relevant to claim No. |
|---|---|---|
| Y | CN 102075780 A (CPT DISPLAY TECHNOLOGY (FUJIAN) LTD. et al.), 25 May 2011 (25.05.2011), claims 8-12 | 1-3 |
| Y | CN 101631256 A (ZHEJIANG UNIVERSITY), 20 January 2010 (20.01.2010), claims | 1-3 |
| A | CN 101271578 A (TSINGHUA UNIVERSITY), 24 September 2008 (24.09.2008), the whole document | 1-9 |
| A | US 2011141237 A1 (CHENG, C.C. et al.), 16 June 2011 (16.06.2011), the whole document | 1-9 |
| A | EP 2268047 A2 (SAMSUNG ELECTRONICS CO., LTD.), 29 December 2010 (29.12.2010), the whole document | 1-9 |
| A | JP 2001103513 A (SANYO DENSHI BUHIN K.K. et al.), 13 April 2001 (13.04.2001), the whole document | 1-9 |

☐ Further documents are listed in the continuation of Box C. ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18 April 2012 (18.04.2012) | **24 May 2012 (24.05.2012)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br>**MENG, Jia**<br>Telephone No.: (86-10) **62413419** |

Form PCT/ISA/210 (second sheet) (July 2009)

## INTERNATIONAL SEARCH REPORT
Information on patent family members

International application No.

**PCT/CN2011/001377**

| Patent Documents referred in the Report | Publication Date | Patent Family | Publication Date |
|---|---|---|---|
| CN 102075780 A | 25.05.2011 | None | |
| CN 101631256 A | 20.01.2010 | None | |
| CN 101271578 A | 24.09.2008 | None | |
| US 2011141237 A1 | 16.06.2011 | JP 2011129116 A | 30.06.2011 |
| | | KR 20110068870 A | 22.06.2011 |
| EP 2268047 A2 | 29.12.2010 | US 2010315488 A1 | 16.12.2010 |
| | | JP 2011004396 A | 06.01.2011 |
| | | KR 20100135032 A | 24.12.2010 |
| | | CN 101923728 A | 22.12.2010 |
| JP 2001103513 A | 13.04.2001 | None | |

Form PCT/ISA/210 (patent family annex) (July 2009)